(19) Europäisches Patentamt / European Patent Office / Office européen des brevets

(11) **EP 2 655 286 B1**

(12) **EUROPEAN PATENT SPECIFICATION**

(45) Date of publication and mention
of the grant of the patent:
**14.11.2018 Bulletin 2018/46**

(21) Application number: **11794511.3**

(22) Date of filing: **15.12.2011**

(51) Int Cl.:
***C04B 28/18*** (2006.01)     ***C04B 28/04*** (2006.01)

(86) International application number:
**PCT/EP2011/072879**

(87) International publication number:
**WO 2012/084677 (28.06.2012 Gazette 2012/26)**

(54) **PROCESS FOR MANUFACTURING AUTOCLAVED FIBERCEMENT PRODUCT**

VERFAHREN ZUR HERSTELLUNG VON AUTOKLAVIERTEN FASERZEMENTPRODUKTEN

PROCÉDÉ POUR LA FABRICATION DE PRODUIT EN FIBROCIMENT TRAITÉ À L'AUTOCLAVE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **20.12.2010 EP 10195996**

(43) Date of publication of application:
**30.10.2013 Bulletin 2013/44**

(73) Proprietor: **ETEX SERVICES NV
1880 Kapelle-op-den-Bos (BE)**

(72) Inventors:
• **KALBSKOPF, Reinhard
B-1880 Kapelle-op-den-Bos (BE)**
• **DEBLAUWE, Veerle
B-1880 Kapelle-op-den-Bos (BE)**
• **BURITICÁ, Juan Vicente
B-1880 Kapelle-op-den-Bos (BE)**

(74) Representative: **Vaeck, Elke et al
Etex Services NV
Kuiermansstraat 1
1880 Kapelle-op-den-Bos (BE)**

(56) References cited:
**US-A1- 2008 072 796**

## Description

### Field of the invention

The present invention relates to a process for manufacturing autoclaved fibercement product including ground waste originating from air-cured fibercement materials. The method to manufacture the autoclaved fibercement product provides a way to reduce the amount of hydraulic binder comprising calcium oxide and siliceous material comprising silica, compared to a similar autoclaved fibercement product manufactured without the addition of said ground waste by taking into account the reactive CaO and the reactive $SiO_2$ contents of said waste. It concerns more specifically a method for the manufacturing of autoclaved fibercement products from a composition with a reduced weight ratio of hydraulic binder to siliceous material compared to a similar autoclaved fibercement product manufactured without the addition of said ground waste.

### State of the art

The recycling of fibercement waste for the production of fibercement products is extensively described in literature.
US20080072796A1 describes compositions for the manufacture of autoclaved fibercement products comprising ground waste originating from defective fibercement products, which are broken materials or final products which are out of specifications, including air-cured fibercement products such as glass fiber reinforced cement boards, and autoclaved fibercement products such as calcium silicate boards or fiber reinforced cement sidings, and/or intermediate defective fibercement products, from a first group such as green sheet, green mat, press mat and/or from a second group such as a hardening mat or curing mat. However, this document does not describe autoclaved fiber reinforced products comprising ground waste from air-cured fibercement materials wherein the amount of cement and siliceous material is reduced compared to an equivalent composition for the manufacturing of autoclaved fibercement without waste by taking into account the content of reactive Cao and the content of reactive $SiO_2$ present in the ground waste from air-cured fibercement.
US20080072796A1 <u>teaches such ground waste to be an aggregate i.e. an inactive material.</u>

### Summary of the invention

We have found that ground waste of air-cured fibercement can be used as a source of reactive CaO (calcium oxide) and reactive $SiO_2$ (silica) in compositions for the manufacturing of autoclaved fibercement materials.
The present invention provides an economical and environmental friendly process for the manufacturing of autoclaved fibercement materials which tackles the problem of disposal of waste from air-cured fibercement and which deals with the concerns about reducing the emission of $CO_2$ as less hydraulic binder is used in the method according to the present invention.
It concerns a process for manufacturing autoclaved fibercement products including ground waste obtained from air-cured fibercement material, comprising the steps of :

   a) determining the total reactive CaO/total reactive $SiO_2$ molar ratio (known as Ra) of a fibercement composition comprising siliceous material and hydraulic binder comprising CaO,

   b) measuring the content of total reactive CaO and the content of total reactive $SiO_2$ in said ground waste,

   c) replacing a total weight amount of siliceous material and hydraulic binder in the composition of step a) by an equal weight amount of said ground waste,

   d) adjusting the composition of step c) by reducing the amount of siliceous material and/or the amount of hydraulic binder in order to recover the original molar ratio Ra for the composition obtained in step <u>a</u>)'

   e) processing and autoclaving the composition of step d)

In step a) the total reactive CaO/total reactive $SiO_2$ molar ratio (Ra) is determined. By reactive CaO and reactive $SiO_2$ is understood the CaO and $SiO_2$ which can react to form calcium silicate during autoclaving. The total amount of reactive CaO is considered as the total amount of CaO present in the composition to manufacture autoclaved fibercement which can react with a siliceous material during autoclaving and is determined by substraction of the CaO content bound as $CaCO_3$ from the overall Cao content of the hydraulic binders such as cement and slaked lime. The total reactive $SiO_2$

content is considered as the total amount of $SiO_2$ present in the composition to manufacture autoclaved fibercement which can react during autoclaving with a component comprising reactive CaO and is calculated taking into account the $SiO_2$ content of the siliceous material comprising silica, the $SiO_2$ content of the hydraulic binder such as cement and the $SiO_2$ content of optional auxiliary materials contributing to the formation of calcium silicate during autoclaving, such as perlite.

This ratio Ra is preferably in the range from 0,4 to 0,9.

In step b) the contents of total reactive CaO and total reactive $SiO_2$ of the ground waste from air-cured fibercement material are measured.

The reactive CaO and reactive $SiO_2$ in the ground waste from air-cured fibercement originate from amorphous calcium silicate hydrates and residual cement clinker.

The process for manufacturing autoclaved fibercement products according to the present invention comprises a step c) of replacing a total weight amount of siliceous material and hydraulic binder in the composition of step a) by an equal amount of ground waste from air-cured fibercement. Preferably the amount of said ground waste is in the range of 3 to not more than 40 weight % with respect to the total dry weight of the composition. Below 3 weight %, the cement substitution is not significant to provide an economical and ecological advantage and the workability of the autoclaved fibercement product is not improved. Autoclaved products comprising more than 40 weight % of ground waste from air-cured fibercement can not be handled properly because the content of hydraulic binder is too low. Autoclaved products comprising at least 5 weight % and not more than 30 weight % are particularly suitable. Most preferably, the autoclaved products manufactured by the process according to the present invention comprise ground waste from air-cured fibercement in a range from 5 to not more than 20 weight%.

The waste from air-cured fibercement which is used for the manufacture of autoclaved fibercement product according to the present invention can be of various origins, selected from but not limited to production reject of finished or semi-finished products, installation scraps or demolition waste. Examples of production reject are defective materials which are out of quality specifications or products damaged upon packaging or during transport. Installation scraps comprise the cut remains or materials damaged on the yard. Demolition waste of air-cured fibercement is primarily composed of roofing products such as slates and corrugated sheets which have to be replaced. The waste from air-cured fibercement is mainly composed of air-cured fibercement, but can comprise minor amounts of surface treating agents such as paints, water repellants, biocidal compositions, sealants, etc.

The waste from air-cured fibercement which is used in the product of the present invention is ground. Preferably, the waste from the air-cured fibercement is first crushed, and then ground. Crushing can be performed by using a shredder or a jaw mill. Hammer or ball mills can be used for the grinding.

It is preferable that at least 60 weight% of the ground waste has a particle size below 100 $\mu$m and more preferably at least 40 weight% of the ground waste has a particle size below 80 $\mu$m.

In a particularly preferred embodiment, the waste from air-cured fibercement which is used in the product of the present invention is first crushed and then co-ground with the siliceous material which is used in the manufacture of the autoclaved fibercement product according to the present invention.

In step d) the amount of hydraulic binder and/or siliceous material of the composition of step c) is adjusted such that the molar ratio of total reactive CaO to total reactive $SiO_2$ equals said ratio Ra of the composition of step a). Preferably, the molar ratio of total reactive CaO to total reactive $SiO_2$ in step d) equals said ratio Ra of the composition of step a) in a range of +/- 5%.

In step e) the composition obtained in step d) is processed and autoclaved.

The Hatschek process is most widely known for the manufacture of fibercement products and is the preferred process for the manufacture of autoclaved fibercement products according to the present invention as well as for the production of the air-cured fibercement material which is used as ground waste in said process.

This process, initially applied to the asbestos-cement, is exhaustively described in the book "Asbestzement" by Harald Klos (Springer Verlag, 1967). Other manufacturing processes known by the man skilled in the art which can be cited are Magnani, Mazza, Flow-on, extrusion and injection. The Hatschek process is particularly suited for the manufacture of flat sheets, corrugated sheets and tubes, and is based on the use of a dewatering rotating cylindrical sieve housed in a vat comprising a diluted aqueous suspension comprising fibers, cement, auxiliary materials and possibly siliceous compounds. A layer of fibercement is built on the sieve and is transferred to a felt; this layer is then enrolled on a forming drum until the required thickness of the sheet is obtained.

The fibercement sheet shaped on the forming drum is cut and removed from the drum, once the desired thickness is obtained. Afterwards it is generally put between templates which have been oiled. Subsequently, it is submitted to a hardening stage at room temperature during about one week, whether or not preceded by curing in an oven at a temperature up to 80°C during at least 5 hours.

Step e) comprises also a hydrothermal treatment under specific pressure, temperature and humidity conditions. This autoclaving step is generally performed within 1 week after hardening and at a temperature in the range from 160°C to 190°C while subjected to absolute steam pressures ranging generally from about 0,7 MPa to about 1,4 MPa during preferably about 6 to 24 hours.

In the autoclave the chemical reaction between the CaO and the $SiO_2$ generates crystalline calcium silicate hydrates such as tobermorite, hydrogarnets such as katoite and the like and is promoted by the presence of an excess of $SiO_2$; the unreacted $SiO_2$ remains in the autoclaved product as inert filler and contributes to the dimensional stability.

The fibercement composition of step a) is a composition which is generally suitable for the production of autoclaved fibercement materials; it does not comprise waste from air-cured fibercement, but comprises generally, besides the hydraulic binder and siliceous material, fibers and can include optional auxiliary materials such as wollastonite.

The fibers in the fibercement composition of step a) comprise generally cellulose fibers, preferably in the range from 5 to 12 weight%, more preferably in the range from 6 to 10 weight% with respect to the initial total weight of the composition in its dry state.

Autoclaved fibercement products preferably do not contain reinforcing fibers other than cellulose fibers.

The cellulose fibers used in the composition of step a) for the manufacture of autoclaved fibercement products are preferably derived from wood pulp, more preferably from chemical wood pulp and are used as reinforcing and process fibers. Cellulose fibers from Kraft pulp are particularly preferred. Good results are obtained with bleached or unbleached cellulose fibers. Suitable pulps are processed from soft wood trees, e.g. Pinus Radiata or hard wood trees. Cellulose fibers characterized by a Kappa number in the range from 14 to 40, more particularly in the range from 25 to 35 are especially preferred. Cellulose fibers refined to a Shopper Riegler degree in the range from 15 to 35, more particularly in the range from 20 to 30 give satisfactory results.

The fibercement composition of step a) comprises a hydraulic binder comprising CaO (calcium oxide). The hydraulic binder preferably comprises cement, more preferably Portland cement, but can be any hydraulic cementitious binder comprising calcium oxide. The hydraulic binder in the fibercement composition in step a) is preferably present in a range from 10 to 45 weight%, more preferably in a range from 15 to 42 weight%, with respect to the initial dry weight of the fibercement composition of step a).

The fibercement composition in step a) can possibly comprise hydraulic binders other than cement, such as slaked lime or any combination thereof.

The fibercement composition in step a) also comprises a siliceous material comprising silica. Examples of siliceous material include amorphous and crystalline silica, ground silica, diatomaceous earth, rice hull ash, silica fume, microsilica, geothermal silica, blast furnace slag, granulated slag, steel slag, fly ash, and quartz, and their blends.

The siliceous material in the composition of step a) is preferably crystalline silica most preferably quartz, quartzite sand, quartzite rock. Amorphous siliceous reactant materials can also be used but are less desirable. Ground quartz with a D50 particle size as measured by a laser diffraction particle size analyser in the range of from 5 to 35 $\mu$m is preferred. Quartz with a D50 particle size in the range of from 10 to 30 $\mu$m is particularly preferred. Often, the quartz used in the autoclaved fiber cement product according to the present invention is obtained by grinding in a ball mill.

Preferably, silica is present in the fibercement composition of step a) in a range from 15 to 55 weight% with respect to the initial dry weight of the composition which is designed in step a).

Preferably the dry weight ratio of cement to silica in the composition of step a) is in the range from 0,6 to 1,5. Auxiliary materials which are possibly used in the fibercement composition of step a) include but are not limited to inert fillers, additives improving or achieving specific product performance, pozzolans, processing aids,... and are preferably present in a range from about 0 to about 30 weight% with respect to the total dry weight of the composition. The auxiliary materials can be chosen from the group including, but not limited to mineral oxides, mineral hydroxides, clays, magnesite or dolomite, calcium carbonate, metal oxides and hydroxides, density modifiers, fire retardants, set accelerators, set retarders, thickeners, pigments, colorants, plasticizers, dispersants, foaming agents, water-proofing agents, aluminium powder, kaolin, alumina trihydrate, wollastonite, or any mixtures thereof. Further auxiliary materials are processing aids, such as flocculants and anti-foam agents. The auxiliary materials which are used in step a) do not comprise waste from air-cured fibercement.

Preferably, the fibercement composition in step a) comprises wollastonite. The shrinkage upon carbonation increases with raising the amount of waste from air-cured fibercement, but can be levelled off by the use of wollastonite. Compositions comprising wollastonite in a range from 3 to 20 weight% with respect to the total dry weight of the composition are particularly preferred. Acicular needles of wollastonite are preferred. High aspect ratio wollastonite is particularly preferred. Good results are obtained with wollastonite having an aspect ratio ranging from 5 to 20, preferably ranging from 10 to 20. Suitable wollastonite grades have a D50 particle size determined by laser granulometry ranging from 40 to 170 $\mu$m, preferably ranging from 90 to 120 $\mu$m.

Autoclaved fibercement products have several advantages over air-cured fibercement materials, such as lower hydric movement and higher strength at equal density, but suffer from shrinkage upon carbonation.

Autoclaved fibercement products are used in a variety of applications, but most often as general purpose building boards such as wall and façade cladding boards, floor tiles, siding planks.

The autoclaved fibercement product manufactured according to the process of the present invention comprises ground waste comprising air-cured fibercement material.

Air-cured fibercement products are manufactured from a hydraulic-setting composition comprising:

- cement, preferably present in a concentration of 60-85 weight%, more preferably in a concentration of 70 to 80 weight% with respect to the initial total weight in the dry state of the composition;
- cellulose fibers, preferably present in a concentration of about 1-5 weight%, more preferably in a concentration of 2 to 4 weight% with respect to the initial total weight in the dry state of the composition,
- reinforcing fibers, preferably present in a concentration of 0,5 to 5 weight% , more preferably in a concentration of 1 to 3 weight% with respect to the initial total weight in the dry state of the composition;
- optional auxiliary materials.

The cement used as hydraulic binder in the composition for the manufacture of air-cured fibercement products is preferably Portland cement but can be any hydraulic cementitious binder comprising calcium oxide, such as slaked lime, or their blends.

The cellulose fibers used for the manufacture of air-cured fibercement products are preferably derived from wood pulp, more preferably from chemical wood pulp and are mainly used as process fibers. Cellulose fibers from Kraft pulp are particularly preferred. Good results are obtained with bleached or unbleached cellulose fibers. Suitable pulps are processed from soft wood trees, e.g. Pinus Radiata or hard wood trees. Cellulose fibers characterized by a Kappa number in the range from 14 to 50, more particularly in the range from 25 to 45 are especially preferred. Cellulose fibers refined to a Shopper Riegler degree in the range from 35 to 70, more particularly in the range from 40 to 65 give satisfactory results.

The reinforcing fibers comprise organic and inorganic fibers. Examples of reinforcing inorganic fibers are alkali-resistant glass fibers, ceramic fibers, and the like, and their blends. Examples of reinforcing organic fibers are fibers of polyolefins such as polyethylene or polypropylene, polyamide, polyacrylonitrile, polyester, aramid, polyvinylalcohol, carbon, and the like, and their blends. Polypropylene and polyvinylalcohol fibers are particularly preferred.

Air-cured fibercement products are not subjected to autoclaving, but are hardened at room temperature during about one week. In some cases this hardening at room temperature is preceded by a curing step in an oven at a temperature up to 80°C during at least 5 hours and between templates.

Air-cured fibercement products are most often used for roofing applications such as slates, roof underlayment and corrugated sheets, and to a minor extent for boards such as façade cladding panels, molded articles such as flower pots and garden furniture.

The composition in step d) of the process for the manufacture of autoclaved fibercement products comprising ground waste from air-cured fibercement has advantageously a lower weight ratio of unhydrated (fresh) hydraulic binder comprising calcium oxide to siliceous material compared to an equivalent formulation without said ground waste from air-cured fibercement.

The ground air-cured fibercement waste which is used in step c) of the process for the manufacture of the autoclaved fibercement products of the present invention comprises primarily amorphous or poorly crystallized calcium silicate hydrates and a minor amount of unreacted cement clinker, which is inaccessible for hydration as it is entrapped by surrounding calcium silicate hydrates. Once ground, the remaining clinker is reactivated in autoclaving conditions while the amorphous or poorly crystallized calcium silicate hydrates are converted to more crystalline calcium silicates, thereby replacing partially the cement and the siliceous material in the composition of step a).

The waste which is used in the process to manufacture the autoclaved fibercement product according to the present invention originates from air-cured fibercement. Waste from autoclaved fibercement material can not be used to reduce significantly the relative amount of cement. Moreover, the content of cellulose fibers in autoclaved fibercement products is much higher than air-cured fibercement products; this higher amount of fibers gives rise to a sharp density drop, and hence a strong reduction of the bending strength of the fibercement product.

The invention also provides an autoclaved fibercement product comprising ground waste from air-cured fibercement material obtained by a process comprising the steps of :

a) determining the total reactive CaO/total reactive $SiO_2$ molar ratio (known as Ra) of a fibercement composition comprising siliceous material and hydraulic binder comprising CaO,

b) measuring the content of total reactive CaO and the content of total reactive $SiO_2$ in said ground waste,

c) replacing a total weight amount of siliceous material and hydraulic binder in the composition of step a) by an equal weight amount of said ground waste,

d) adjusting the composition of step c) by reducing the amount of siliceous material and/or the amount of hydraulic binder in order to recover the original molar ratio Ra of the composition obtained in step a), e) processing and autoclaving the composition of step d).

The autoclaved fibercement products according to the present invention have a lower density due to the ground waste from air-cured fibercement. The inventors suppose that the density reduction is due on the one hand to the increasing total amount of fibers with the addition of waste from air-cured fibercement, and on the other hand to the replacement of fresh cement by the coarser and less dense ground waste from air-cured fibercement. Unlike commonly used density modifiers such as expanded perlite, expanded vermiculite, cenospheres, expanded polystyrene beads, the ground waste from air-cured fibercement can be easily used on a Hatschek production line as it does not float. Although the strength of the autoclaved fibercement product of the present invention is lower compared to an equivalent formulation without ground air-cured fibercement waste, the ratio of the strength to the square of the density is rather constant over a wide range of addition rates of ground waste from air-cured fibercement, said strength to the square of the density ratio being a typical parameter for a skilled person.

The fibercement products manufactured according to the present invention are further characterized by a satisfactory bending strength and good dimensional stability in terms of moisture movement.

The fibercement products manufactured according to the present invention show excellent workability in terms of nailability, machinability, and ability to be scored and snapped.

## Detailed description of particular embodiments

The invention is described hereafter in a detailed way using particular examples of embodiment.

Chemical analysis of Portland cement and ground waste from air-cured fibercement.

The calcium oxide content of the Portland cement and the ground waste from air-cured fibercement which were used in the pilot trials has been determined by potentiometric titration with EGTA. The calcium oxide bound as calcium carbonate has been substracted from the calcium oxide content determined by potentiometric titration with EGTA, and was determined by IR measurement of the inorganic carbon dioxide generated by ignition of a sample. The inorganic $CO_2$ which originates from $CaCO_3$ formed upon ageing of the air-cured matrix and from $CaCO_3$ used as filler, is determined as total $CO_2$ minus $CO_2$ from organic components such as cellulose and synthetic fibers; the organic $CO_2$ is determined after treatment of the sample with hydrochloric acid. The reactive calcium oxide (CaO not bound as $CaCO_3$) content of the ground waste from air-cured fibercement was found to be 46 weight% and 65 weight% for the Portland cement.

The silica content of the Portland cement and the ground waste from air-cured fibercement has been measured by spectrophotometry using the yellow colour formed by the complex with ammoniumheptamolybdate; a content of 22,25 weight% was found for the Portland cement and 18,6 weight% for the waste sample.

The reactive $SiO_2$ content of the quartz has been taken as 100%.

In case of the examples according to the invention (examples 1 to 5 in table 1), the contents of reactive CaO and reactive $SiO_2$ of the waste are taken into account to adjust in step d) the amount of Portland cement and quartz, such that the molar ratio of total reactive CaO/total reactive total $SiO_2$ equals this molar ratio of 0,4 of the reference example without ground waste from air-cured fibercement(C. Ex. 1 in table 1).

Preparation of the blends and pilot Hatschek production of fiber reinforced cement samples.

Cementitious products were manufactured on a pilot Hatschek line reproducing the main characteristics of the products obtained by industrial methods. The compositions which have been used after strong dilution with water are described in table 1, wherein OPC means Ordinary Portland Cement and FC stands for fibercement. Comparative example 1 is the reference sample without waste and corresponds to a composition as defined in step a). The formulations of the examples 1 to 5 comprise waste (as added in step c) of the method for the manufacture of the autoclaved fibercement product according to the present invention) Four trials (examples 1 to 4) have been run with increasing amount of waste (from 10 to 40 weight% with respect to the total dry weight of the composition). The composition of example 5 comprises 9,5 weight% wollastonite besides 30 weight% of waste. Wollastonite does not contribute to the reactive $SiO_2$ content of the composition. The sheets were hardened during one night at 50 °C, and afterwards autoclaved during 12 hours at 170°C and 0,72 MPa.

Table 1 summarizes the properties of the autoclaved FC pilot samples.

The bending strength is determined by a flexural test on three points using an apparatus UTS, a span of 146 mm and a test speed of 20 mm/minute on air-dry (AD) samples of 50 mm*160 mm. Eight samples are measured in the two directions (machine direction (MD) and direction perpendicular to this (cross direction (CD)), 2 weeks after the production. The apparatus records the curve stress/strain. The values of SMOR (modulus of rupture) are the average of the values of the measurements in the MD and CD directions and are mentioned in table 1.

The density (d) is determined by hydrostatic weighing applying the following formula :

$$d = C/(A-B)$$

wherein

A is the weight of the sample sheet in its water saturated (WS) state,

B is the weight of the WS sample sheet under water,

C is the weight of the sample sheet dried during 48 hours at 105°C.

Hydric movement has been tested according to an internal laboratory method by measuring the distance differences between 2 fixed points from oven-dry (dried at 105°C until constant weight) to wet saturated (WS) conditions.

Carbonation shrinkage is tested according to an internal method similar to the measurement of hydric movement after three carbonation cycli, each cycle consisting of exposure to $CO_2$ (1,5 1/min) during 24 hours at 60°C and 90% relative humidity, followed by drying during 72 hours at 105°C.

Workability is measured according to an internal method for 6 different operations including ability to nail and screw, and the easiness of cutting and snapping. Each operation is scored individually from 0 (bad) to 3 (good). All scores are added up and are used for classification whereby:

class A : very good workability (14-18)

class B : good workability (9-13)

class C : bad workability (2-8)

class D : very bad workability (0-1)

Table 1

| Composition | Example → Unit | C.Ex.1 | Ex.1 | Ex.2 | Ex.3 | Ex.4 | Ex.5 |
|---|---|---|---|---|---|---|---|
| Quartz | weight% | 53 | 51,1 | 49,3 | 47,4 | 45,5 | 41,7 |
| Cement OPC | weight% | 35 | 26,9 | 18,7 | 10,6 | 2,5 | 6,8 |
| Cellulose | weight% | 8 | 8 | 8 | 8 | 8 | 8 |
| Ground waste from air-cured FC | weight% | 0 | 10 | 20 | 30 | 40 | 30 |
| Wollastonite | weight% | | | | | | 9,5 |
| $Al(OH)_3$ | weight% | 4 | 4 | 4 | 4 | 4 | 4 |
| Cement OPC/Quartz (weight ratio) | - (weight% /weight% ) | 0,66 | 0,54 | 0,37 | 0,22 | 0,05 | 0,16 |
| Total reactive CaO/total reactive $SiO_2$ | - (mol/mol ) | 0,40 | 0,40 | 0,40 | 0,40 | 0,40 | 0,40 |
| Density (d) | $10^3$ kg/m$^3$ | 1,26 | 1,19 | 1,15 | 1,09 | 1,03 | 1,07 |
| SMOR (AD) | MPa | 24,0 | 20,2 | 19,2 | 17,7 | 16,3 | 16,6 |
| SMOR (AD) / d$^2$ | MPa/($10^3$ kg/m$^3$)$^2$ | 15,1 | 14,3 | 14,5 | 14,9 | 15,3 | 14,5 |
| Hydric Movement | | | | | | | |
| Autoclaved→ dry 60°C | $10^{-3}$m/m | -1,38 | -1,2 | -1,21 | -1,23 | -1,16 | -0,83 |
| Autoclaved→ dry 105°C | $10^{-3}$m/m | -2,27 | -2,09 | -2,09 | -2,17 | -2,11 | -1,8 |
| Dry 105°C→ WS | $10^{-3}$m/m | 2,06 | 1,94 | 1,90 | 1,94 | 1,97 | 1,73 |
| Water content Air-dry | % | 28,7 | 27,3 | 30,0 | 33,5 | 32,3 | 32,4 |
| Carbonation shrinkage after 3 cy. $CO_2$ | $10^{-3}$m/m | 4,1 | 5,4 | 6, 8 | 8,9 | 9,9 | 2,6 |
| Workability | | | | | | | |
| Score | | | 9 | | 11,5 | | 15 | |
| Class | | | B | | B | | A | |

The results in table 1 show that the workability improves by the addition of ground waste from air-cured fibercement, with a simultaneous reduction of the density (d), however not at the expense of the intrinsic matrix strength (SMOR/d$^2$), and an increase of the shrinkage upon carbonation. The latter can be levelled of by addition of wollastonite (example 5 versus example 3).

**Claims**

1. Process for manufacturing autoclaved fiber cement products including ground waste obtained from air-cured fiber cement material, comprising the steps of :

    a) determining the total reactive CaO/total reactive $SiO_2$ molar ratio (known as Ra) of a fiber cement composition comprising siliceous material and hydraulic binder comprising CaO,
    b) measuring the content of total reactive CaO and the content of total reactive $SiO_2$ in said ground waste,
    c) replacing a total weight amount of siliceous material and hydraulic binder in the composition of step a) by an equal weight amount of said ground waste,
    d) adjusting the composition obtained in step c) by reducing the amount of siliceous material and/or the amount of hydraulic binder in order to recover the original molar ratio Ra of the composition of step a),
    e) processing and autoclaving the composition of step d).

2. Process according to claim 1, wherein the autoclaving step is performed within 1 week after hardening at a temperature in the range of 160°C to 190°C and at absolute steam pressures ranging from 0,7 MPa to 1,4 MPa during 6 to 24 hours.

3. Process according to any one of the preceding claims, wherein the ground waste obtained from air-cured fiber cement material is in the range of from 3 to 40 wt%.

4. Process according to any one of the preceding claims, wherein the siliceous material is crystalline silica.

5. Process according to claim 4, wherein the crystalline silica is quartz.

6. Process according to any one of the preceding claims, wherein the hydraulic binder comprises cement.

7. Process according to claim 6, wherein the cement is Portland cement.

8. Process according to any one of the preceding claims, wherein the hydraulic binder comprises slaked lime.

9. Process according to any one of the preceding claims, wherein the fiber cement composition comprises wollastonite.


**Patentansprüche**

1. Verfahren zur Herstellung von autoklavierten Faserzementerzeugnissen, die aus luftgehärtetem Faserzementmaterial gewonnene gemahlene Abfälle enthalten, umfassend die Schritte:

    a) Bestimmen des molaren Verhältnisses (als Ra bezeichnet) von reaktivem Gesamt-CaO zu reaktivem Gesamt-$SiO_2$ einer Faserzementzusammensetzung, die ein siliziumhaltiges Material und ein CaO umfassendes hydraulisches Bindemittel umfasst,
    b) Messen des Gehalts an reaktivem Gesamt-CaO und des Gehalts an reaktivem Gesamt-$SiO_2$ im gemahlenen Abfall,
    c) Ersetzen eines Gesamtgewichtsanteils von siliziumhaltigem Material und hydraulischem Bindemittel in der Zusammensetzung von Schritt a) durch einen gleich großen Gewichtsanteil des gemahlenen Abfalls,
    d) Einstellen der in Schritt c) gewonnenen Zusammensetzung durch Verminderung der Menge von siliziumhaltigen Material und/oder der Menge von hydraulischem Bindemittel zur Wiederherstellung des ursprünglichen molaren Verhältnisses Ra der Zusammensetzung von Schritt a),
    e) Verarbeiten und Autoklavieren der Zusammensetzung von Schritt d).

2. Verfahren nach Anspruch 1, wobei der Autoklavierschritt innerhalb von 1 Woche nach dem Härten bei einer Temperatur im Bereich von 160 °C bis 190 °C und bei absoluten Dampfdrücken im Bereich von 0,7 MPa bis 1,4 MPa 6 bis 24 Stunden lang ausgeführt wird.

3. Verfahren nach einem der vorhergehenden Ansprüche, wobei der aus luftgehärtetem Faserzementmaterial gewonnene gemahlene Abfall im Bereich von 3 bis 40 Gew.-% liegt.

**4.** Verfahren nach einem der vorhergehenden Ansprüche, wobei das siliziumhaltige Material kristallines Siliziumdioxid ist.

**5.** Verfahren nach Anspruch 4, wobei das kristalline Siliziumdioxid Quarz ist.

**6.** Verfahren nach einem der vorhergehenden Ansprüche, wobei das hydraulische Bindemittel Zement umfasst.

**7.** Verfahren nach Anspruch 6, wobei der Zement Portlandzement ist.

**8.** Verfahren nach einem der vorhergehenden Ansprüche, wobei das hydraulische Bindemittel Löschkalk umfasst.

**9.** Verfahren nach einem der vorhergehenden Ansprüche, wobei die Faserzementzusammensetzung Wollastonit umfasst.

## Revendications

**1.** Procédé de fabrication de produits en fibrociment traité à l'autoclave, contenant des déchets broyés obtenus à partir d'un matériau sous forme de fibrociment durci par l'air, comprenant les étapes qui consistent à :

a) déterminer le rapport molaire du CaO réactif total/SiO$_2$ réactif total (connu sous le nom de Ra) d'une composition de fibrociment comprenant un matériau siliceux et un liant hydraulique comprenant du CaO,
b) mesurer la teneur en CaO réactif total et la teneur en SiO$_2$ réactif total dans lesdits déchets broyés,
c) remplacer une quantité totale en poids de matériau siliceux et de liant hydraulique dans la composition de l'étape a) par une quantité égale en poids desdits déchets broyés,
d) ajuster la composition obtenue à l'étape c) en réduisant la quantité de matériau siliceux et/ou la quantité de liant hydraulique afin de restaurer le rapport molaire original Ra de la composition de l'étape a),
e) traiter et autoclaver la composition de l'étape d) .

**2.** Procédé selon la revendication 1, dans lequel l'étape d'autoclavage est effectuée dans un délai de 1 semaine après un durcissement à une température de 160 °C à 190 °C et à des pressions absolues de vapeur de 0,7 MPa à 1,4 MPa durant 6 à 24 heures.

**3.** Procédé selon l'une quelconque des revendications précédentes, dans lequel les déchets broyés obtenus à partir d'un matériau sous forme de fibrociment durci par l'air sont présents dans une quantité de 3 à 40 % en poids.

**4.** Procédé selon l'une quelconque des revendications précédentes, dans lequel le matériau siliceux est de la silice cristalline.

**5.** Procédé selon la revendication 4, dans lequel la silice cristalline est le quartz.

**6.** Procédé selon l'une quelconque des revendications précédentes, dans laquelle le liant hydraulique comprend du ciment.

**7.** Procédé selon la revendication 6, dans lequel le ciment est un ciment Portland.

**8.** Procédé selon l'une quelconque des revendications précédentes, dans lequel le liant hydraulique comprend de la chaux éteinte.

**9.** Procédé selon l'une quelconque des revendications précédentes, dans lequel la composition de fibrociment comprend de la wollastonite.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20080072796 A1

**Non-patent literature cited in the description**

- **HARALD KLOS.** Asbestzement. Springer Verlag, 1967